# EUROPEAN PATENT APPLICATION

(11) **EP 4 650 301 A1**
(43) Date of publication of application: **19.11.2025**
(21) Application number: 24901766.6
(22) Date of filing: 10.10.2024
(51) Int. Cl.: B65G 1/04

(54) **AUTOMATIC GOODS DELIVERY DEVICE AND DISTRIBUTION VEHICLE**

(30) Priority: 18.03.2024 CN 202410311040
(71) Applicant: Beijing Sankuai Online Technology Co., Ltd., Beijing 100080 (CN); Meituan Technology Co., Ltd., Shenzhen, Guangdong 518131 (CN); Shenzhen Meituan Technology Co., Ltd, Shenzhen, Guangdong 518131 (CN)
(72) Inventor: LIU, Yang, Beijing 100080 (CN); YANG, Yuwei, Beijing 100080 (CN)
(74) Representative: Studio Torta S.p.A.
(86) International application number: PCT/CN2024/123996
(87) International publication number: WO 2025/194746

(57) **Abstract**

The present disclosure relates to a device for automatically delivering goods and a distribution vehicle. The device for automatically delivering goods includes a container and a mechanical arm. The container includes a rack and packing boxes arranged on the rack. The packing boxes have bottom walls used to bear goods, and the bottom walls are retractable and extendable moving parts. The mechanical arm is used to move the packing boxes between a specified position and the container. The mechanical arm includes a mechanical arm body and an end actuator mounted at an end of the mechanical arm body. The end actuator is used to grab the packing boxes and drive, when the packing boxes are moved to the specified position, the moving parts to be retracted, so as to release the goods.

## Description

The present disclosure claims the priority to Chinese Patent Application No. 202410311040.1, filed on March 18, 2024 and entitled "Device for automatically delivering goods and distribution vehicle", which is incorporated in its entirety herein by reference.

### TECHNICAL FIELD

The present disclosure relates to the field of goods distribution, and particularly relates to a device for automatically delivering goods and a distribution vehicle.

### BACKGROUND

Automatic distribution with full link automation encompasses not only automatic driving on a middle route, but also automatic goods handling at front and rear ends. For example, in a scene of automatic takeaway delivery, problems such as grabbing goods at front and rear ends and moving goods need to be solved. In the related art, goods are grabbed and moved by a mechanical hand.

### SUMMARY

The present disclosure provides a device for automatically delivering goods. The device includes:
a container including a rack and packing boxes arranged on the rack, where the packing boxes have bottom walls used to bear goods, and the bottom walls are retractable and extendable moving parts; and
a mechanical arm used to move the packing boxes between a specified position and the container, where the mechanical arm includes a mechanical arm body and an end actuator mounted at an end of the mechanical arm body, and the end actuator is used to grab the packing boxes and drive, when the packing boxes are moved to the specified position, the moving parts to be retracted, so as to release the goods.

Optionally, accommodating channels are formed on edges of opposite side walls of each of the packing boxes. The edge of each of the side walls at least includes a bottom edge of the packing box and one side edge adjacent to the bottom edge. Each of the moving parts is a roller blind movable between extension positions and retraction positions in the accommodating channels.

At the extension positions, the roller blinds are at least partially located at the bottom edges, and the roller blinds are capable of closing bottom openings of the packing boxes and bearing the goods.

At the retraction positions, the roller blinds are at least partially located at the side edges, the bottom openings of the packing boxes are exposed, and the goods are released.

Optionally, the end actuator includes a body part, a chain wheel arranged on the body part, and a power member driving the chain wheel to rotate. Teeth of the chain wheel are capable of extending into gaps of the roller blinds. The power member drives the chain wheel to rotate, so as to drive the roller blinds to move in the accommodating channels.

Optionally, each of the roller blinds includes a plurality of carbon rods sequentially arranged in parallel. Magnetic members are arranged in inner cavities of the carbon rods located at two ends of each of the roller blinds. The end actuator is provided with a Hall sensor. The Hall sensor is used to determine positions of the roller blinds in the accommodating channels by detecting positions of the carbon rods provided with the magnetic members.

Optionally, the packing boxes are provided with locking parts cooperating with the moving parts. When the end actuator is connected to the packing boxes, the locking parts are driven to be unlocked.

Optionally, the locking parts include rotatable locking pins. One ends of the locking pins are provided with hook-like parts, and the other ends of the locking pins are provided with clamping protrusions. Each of the hook-like parts is capable of extending into or retracting from a gap between two adjacent carbon rods of the roller blind. Side walls of the packing boxes are provided with holes. The clamping protrusions are capable of protruding from the holes. When the end actuator is connected to the packing boxes, the body part presses the clamping protrusions into the packing boxes, so as to drive the locking pins to rotate.

Optionally, the rack is provided with a plurality of cabinets. The cabinets are used to accommodate the packing boxes. The mechanical arm is used to move the packing boxes in a horizontal direction to enter or exit the cabinets. Openable and closable cabinet doors are arranged at one sides of the cabinets facing away from entrances of the packing boxes, so as to close openings of the packing boxes.

Optionally, the cabinets are provided with guiding members. The packing boxes are provided with guiding holes matched with the guiding members in shape. A size of the guiding holes gradually decreases in a moving direction in which the packing boxes enter the cabinets.

Optionally, the cabinets are provided with electromagnets. The packing boxes are provided with magnetic adsorption members. The electromagnets and the magnetic adsorption members are capable of being connected in a switched-on or switched-off manner.

A second aspect of the present disclosure provides a distribution vehicle. The device for automatically delivering goods is mounted on the distribution vehicle.

Other features and advantages of the present disclosure will be described in detail in the following specific implementations.

### BRIEF DESCRIPTION OF THE DRAWINGS

The accompanying drawings, used to provide further understanding of the present disclosure, constitute part of the description, and serve to explain the present disclosure along with the following specific implementations, instead of limiting the present disclosure. In the accompanying drawings:
FIG. 1 is a schematic structural diagram of a device for automatically delivering goods according to an illustrative embodiment of the present disclosure;
FIG. 2 and FIG. 3 are schematic structural diagrams of a distribution vehicle according to an illustrative embodiment of the present disclosure;
FIG. 4 and FIG. 5 are schematic structural diagrams of a container in a device for automatically delivering goods according to an illustrative embodiment of the present disclosure;
FIG. 6 to FIG. 8 are schematic structural diagrams of a rack in a device for automatically delivering goods according to an illustrative embodiment of the present disclosure;
FIG. 9 to FIG. 17 are schematic structural diagrams of a packing box in a device for automatically delivering goods according to an illustrative embodiment of the present disclosure;
FIG. 18 and FIG. 19 are schematic structural diagrams of a mechanical arm in a device for automatically delivering goods according to an illustrative embodiment of the present disclosure; and
FIG. 20 and FIG. 21 are schematic structural diagrams of an end actuator in a device for automatically delivering goods according to an illustrative embodiment of the present disclosure.

### Descriptions of reference numerals:

10-container;
100-rack; 110-frame structure; 120-electromagnet; 130-guiding member; 140-cabinet door;
200-packing box; 201-top wall; 202-first side wall; 203-second side wall; 2021-hole; 2022-power end input port; 210-gripping part; 220-moving part; 221-carbon rod; 222-first fixing ring; 230-accommodating channel; 240-locking part; 241-locking pin; 2411-hook-like part; 2412-clamping protrusion; 250-opening; 260-magnetic adsorption member; 270-guiding hole;
300-mechanical arm; 310-multi-axis mechanical arm; 320-end actuator; 321-body part; 3210-lightening hole; 322-chain wheel; 3220-mounting shaft; 323-power member; 324-transmission member; 325-hanging member; 326-Hall sensor; 327-clamping edge; 328-connecting hole; 329-contact part; and
400-distribution vehicle.

### DETAILED DESCRIPTION OF THE EMBODIMENTS

Specific implementations of the present disclosure will be described in detail below in conjunction with the accompanying drawings. It should be understood that the specific implementations described herein are merely used to describe and explain the present disclosure, but are not intended to limit the present disclosure.

It should be noted that all actions of obtaining signals, information or data in the present disclosure are performed on the premise of complying with corresponding data protection laws and policies of the local country and obtaining authorization from a corresponding device owner.

In the present disclosure, if not described to be contrary, used words such as "upper, lower, left, and right" are generally defined in a case of normally using a device for automatically delivering goods according to the present disclosure. "Front, rear, front surface, and back surface" are defined with respect to a moving direction of a packing box. The packing box moves forward into a latticed opening of a rack and moves backward out of the latticed opening of the rack. "Inside and outside" refer to the inside and the outside of a contour of a corresponding component. The used terms such as "first" and "second" are used to distinguish different components, and do not indicate a sequence and importance. In addition, when the following description involves the accompanying drawings, unless otherwise specified, a same reference numeral in different accompanying drawings denotes a same or similar element.

In a case with increasing types of takeaways in the prior art, different takeaways fail to be grabbed with a mechanical hand. However, in a solution where containers are designed at front and rear ends to accommodate takeaways, an asset management problem caused by container placement and a utilization problem of the containers further need to be considered.

An objective of the present disclosure is to provide a system for distributing goods, so as to solve an asset management problem caused by placement of the containers at the front and rear ends. Through the technical solution provided by the present disclosure, in a device for automatically delivering goods according to the present disclosure, packing boxes may accommodate different types of goods. A standardized design of a circulation process and a retractable and extendable moving part design are implemented with one type of packing boxes. After a roller blind is retracted, the goods automatically fall to a delivery position, and only the goods are placed at a tail end. In this way, an asset management problem caused by container placement is avoided, and a use ratio of containers is improved. Further, an end actuator of a mechanical arm may grab the packing boxes, and may also drive the roller blind to be retracted or extended through a chain wheel. A power source of the roller blind comes from the chain wheel on the end actuator. When the end actuator is connected to the packing boxes, the roller blind may be driven to be retracted. In a case where the packing boxes are used independently, the roller blind may always be at extension positions, such that abnormal falling of the goods in a non-distribution case is avoided.

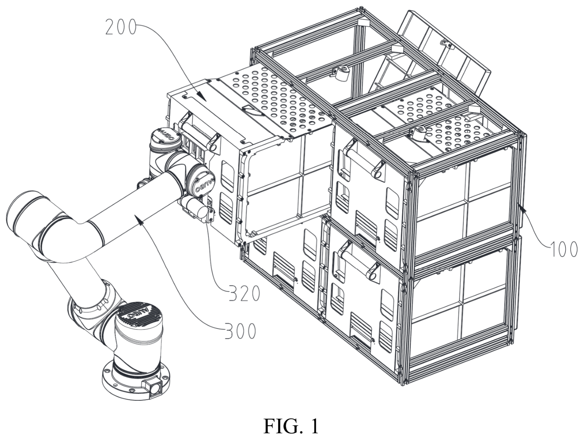

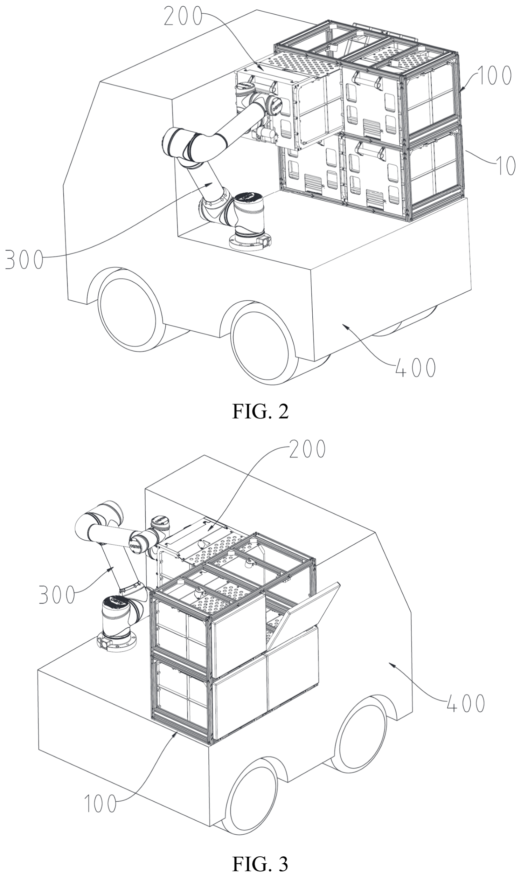

For example, in a case with takeaways, to implement automatic delivery of goods at front and rear ends, in an illustrative embodiment of the present disclosure, as shown in FIG. 1, a device for automatically delivering goods is provided. The device for automatically delivering goods includes two parts: a container 10 and a mechanical arm 300. The container 10 includes a rack 100 and packing boxes 200 arranged on the rack 100. The mechanical arm 300 includes a multi-axis mechanical arm 310 and an end actuator 320 arranged at an end of the multi-axis mechanical arm 310. The mechanical arm 300 may move each of the packing boxes 200 between the container 10 and a delivery position through cooperation of the end actuator 320 and the packing box 200, automatically place the goods at the delivery position, and then move an empty packing box 200 back to the rack 100, such that an automatic delivery action of the goods is completed. As shown in FIG. 2 and FIG. 3, the device for automatically delivering goods may be entirely mounted on a distribution vehicle 400. The distribution vehicle 400 may move the container 10 and the mechanical arm 300 to a delivery point. Meanwhile, automatic driving on a middle route and automatic goods handling at the front and rear ends are implemented, and automatic distribution with full link automation is implemented. These two parts are designed by the present disclosure. The two parts and a cooperation manner of components between the two parts will be described in detail below with reference to specific embodiments.

FIG. 1 shows a device for automatically delivering goods according to an illustrative embodiment of the present disclosure.

FIG. 2 and FIG. 3 show a distribution vehicle 400 according to an illustrative embodiment of the present disclosure. The device for automatically delivering goods as shown in FIG. 1 may be entirely mounted on the distribution vehicle 400. In other embodiments, The mechanical arm 300 and the container 10 may be placed on the ground or in a workshop.

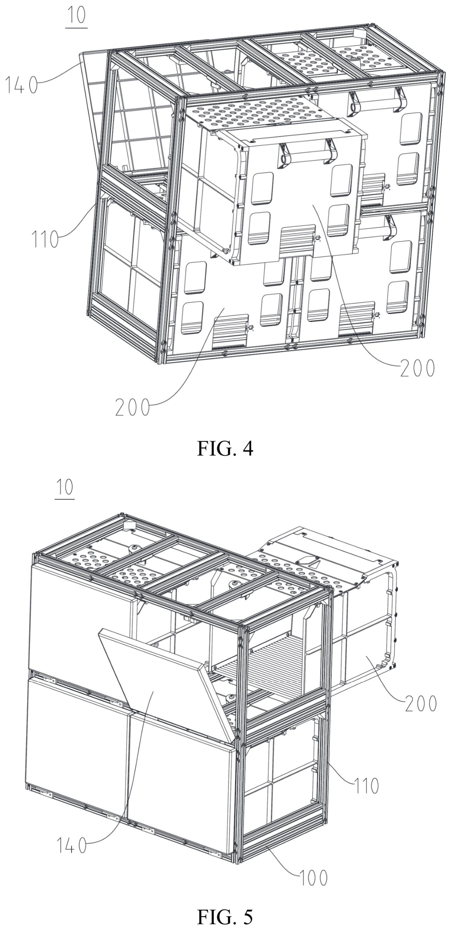

FIG. 4 and FIG. 5 show a container 10 according to an illustrative embodiment of the present disclosure. The container includes a rack 100 and a plurality of packing boxes 200 placed on the rack 100. A number of the packing boxes 200 on the rack 100 is not limited, and may be designed as required.

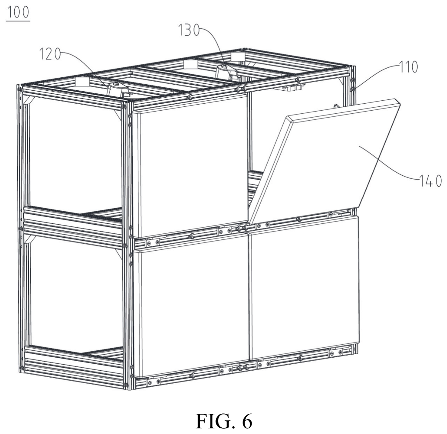

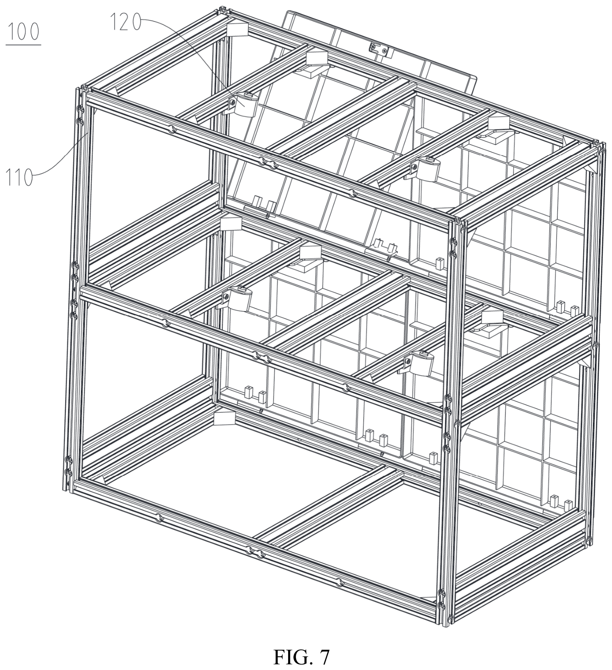

FIG. 6 to FIG. 8 show a rack 100 according to an illustrative embodiment of the present disclosure. A structure of the rack 100 is not limited, may be a frame structure 110 shown in the figure, and has a plurality of latticed openings.

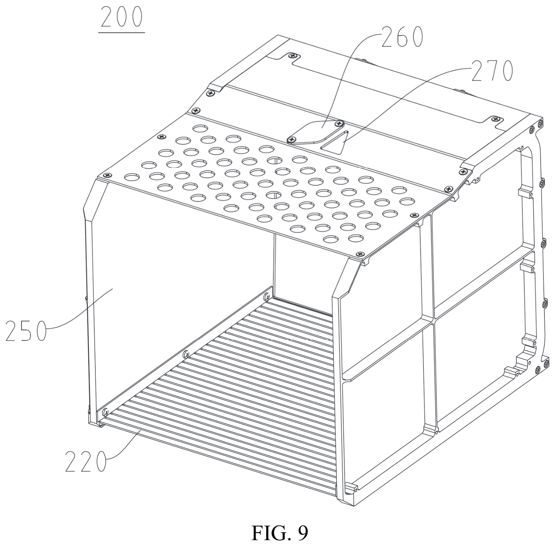

FIG. 9 to FIG. 17 show a packing box 200 according to an illustrative embodiment of the present disclosure. The packing box 200 may exist independently, or may be placed on a rack 100 as one of a plurality of packing boxes of the rack 100, and is not limited by the present disclosure. Details will be described below with the latter as an example.

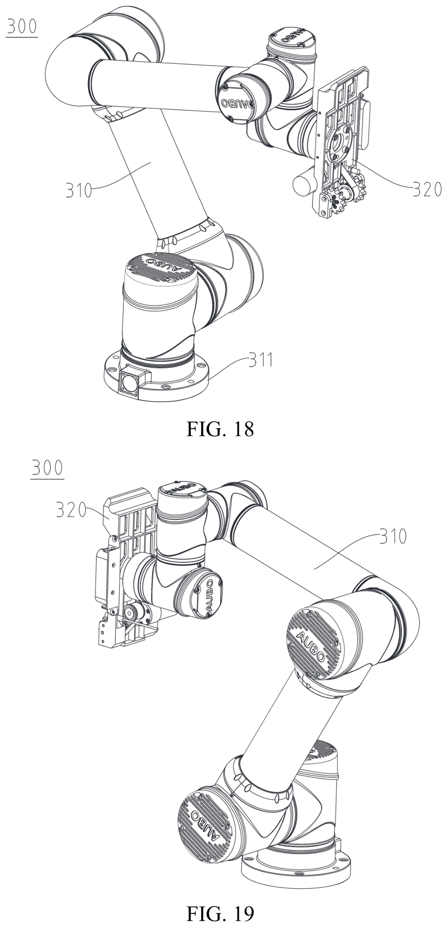

FIG. 18 and FIG. 19 show a mechanical arm 300 according to an illustrative embodiment of the present disclosure. The mechanical arm 300 includes a multi-axis mechanical arm 310 and an end actuator 320 mounted at an end of the multi-axis mechanical arm 310. The multi-axis mechanical arm 310 may be a six-axis mechanical arm or a mechanical arm in another form, has a main function of carrying and moving packing boxes 200, and may move the packing boxes 200 to a delivery position or to a rack 100.

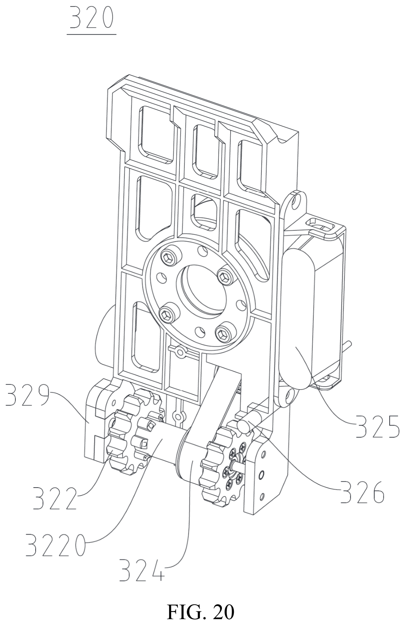

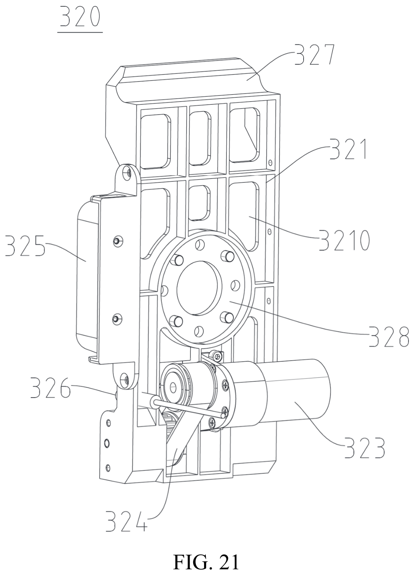

FIG. 20 and FIG. 21 show an end actuator 320 according to an illustrative embodiment of the present disclosure. The end actuator 320 may be mounted at an end of any moving part that is not limited to a mechanical arm, and for example, may be a motion module capable of performing multi-directional motion. Specifically, detailed description will be provided below with a case where the end actuator 320 is mounted at a tail end of a multi-axis mechanical arm 310 as an example.

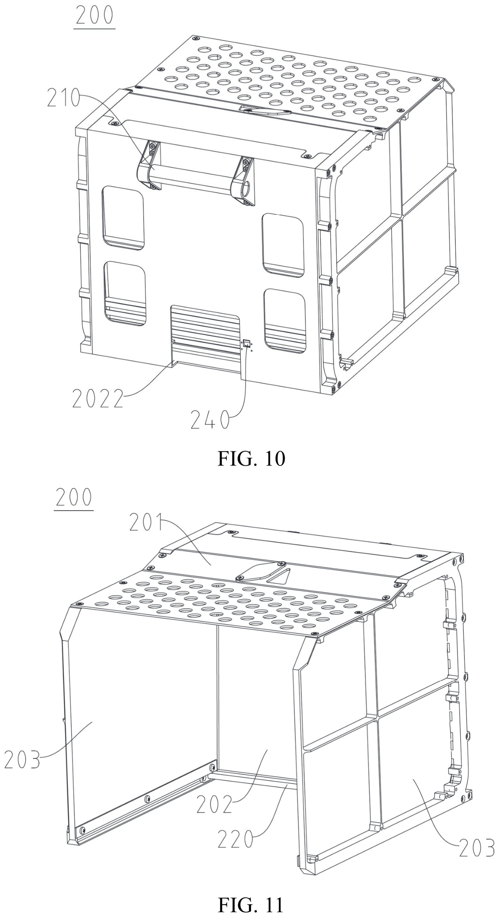

The end actuator 320 performs a grabbing action on packing boxes 200, and a mechanical arm 300 drives the packing boxes 200 to move between a container 10 and a delivery position. For implementing above operations, in the present disclosure, as shown in FIG. 10, each of the packing boxes 200 is provided with a gripping part 210, and the end actuator 320 drives the packing boxes 200 to move by grabbing the gripping part 210. The gripping parts 210 may be any suitable structures cooperating with the end actuator 320. In an illustrative embodiment of the present disclosure, each of the gripping parts 210 includes two mounting seats fixed to side walls of the packing box 200 and a handle connected between the two mounting seats. Gripping spaces are formed between the handles, the mounting seats, and the side walls of the packing boxes 200. As shown in FIG. 20 and FIG. 21, the end actuator 320 includes a body part 321, an upper side of the body part 321 is provided with a clamping edge 327, and the clamping edge 327 is capable of extending into the gripping space from bottom to top so as to be clamped, such that the mechanical arm 300 is connected to the packing boxes 200. In other embodiments, each of the gripping parts 210 may be a handle, a claw, a grabbing hole, etc. The packing boxes 200 may be moved by any external force that is not limited to the mechanical arm and may also be an unmanned aerial vehicle, an operator, etc., which is not limited by the present disclosure.

As shown in FIG. 9, each of the packing boxes 200 has a bottom wall used to bear goods. The bottom walls may be retractable and extendable moving parts 220. The moving parts 220 are extended to serve as the bottom walls of the packing boxes 200. The goods may be placed on the moving parts 220. The mechanical arm 300 drives the packing boxes 200 accommodating the goods to randomly move. When the packing boxes 200 move to a specified position, as shown in FIG. 11, the moving parts 220 are retracted, and the goods are automatically released under the gravity of the goods.

In the packing boxes 200 provided by the present disclosure, different types of goods may be placed in the packing boxes 200. The different types of goods are grabbed and moved through one type of mechanical arm 300, such that a standardized container design is implemented. One packing box is used to standardize an entire circulation process, so as to save design cost. When the packing box 200 is moved to a distribution position, the moving part 220 is retracted, the goods automatically fall to complete a delivery action, and an empty packing box may be moved back to the rack 100. The goods rather than a container are released at the tail end, such that additional investment of recovering a packing box is avoided, and an asset management problem caused by container releasing and a use ratio problem of containers are avoided.

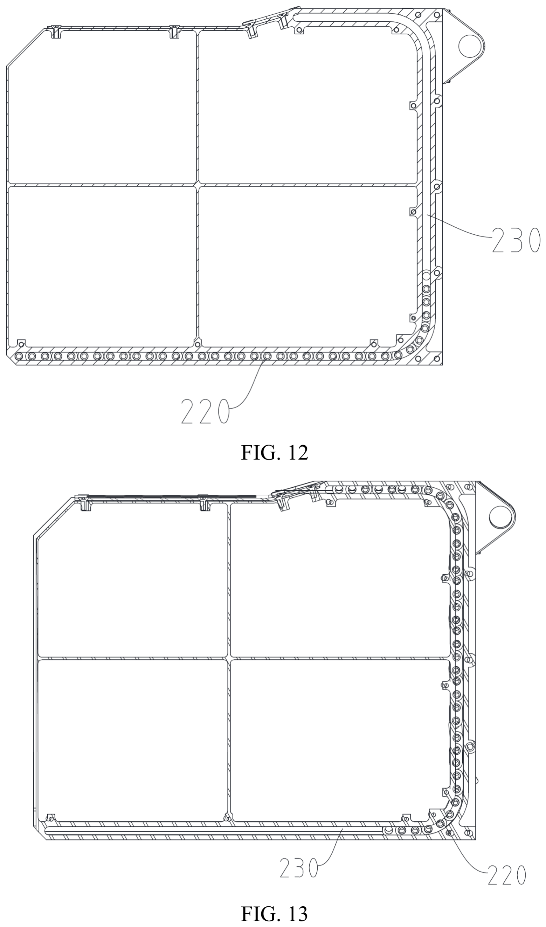

The moving parts 220 may be retracted or extended in various manners, such as pulling and winding. In an illustrative embodiment of the present disclosure, as shown in FIG. 12 and FIG. 13, accommodating channels 230 are formed on edges of opposite side walls of the packing boxes 200, the edge of each of the side walls at least includes a bottom edge of the packing box 200 and one side edge adjacent to the bottom edge. Each of the moving parts 220 may be a roller blind whose two ends are mounted in the accommodating channels 230. Each of the roller blinds is movable between extension positions and retraction positions in the accommodating channels 230. At the extension positions (FIG. 12), the roller blinds are at least partially located at the bottom edges, and the roller blinds are capable of closing bottom openings of the packing boxes 200 and bearing the goods. At the retraction positions (FIG. 13), the roller blinds are at least partially located at the side edges, the bottom openings of the packing boxes 200 are exposed, and the goods are released.

In the embodiment, as shown in FIG. 11, each of the packing boxes 200 may be of a square structure defined by a top wall 201, a bottom wall, a first side wall 202, and two opposite second side walls 203. The accommodating channels 230 are provided on bottom edges, one side edges (right side edges), and part of top edges of the two opposite second side walls 203. Positions provided with the accommodating channels 230 are thickened. The roller blinds move between the extension positions and the retraction positions in the accommodating channels 230 in an overall translation manner. Clearly, in other embodiments, the accommodating channels 230 may be provided only on the bottom edges, and the roller blinds may be made of a flexible material and be retracted to be located at one sides of the bottom openings in a winding manner, such that the goods may also be automatically released.

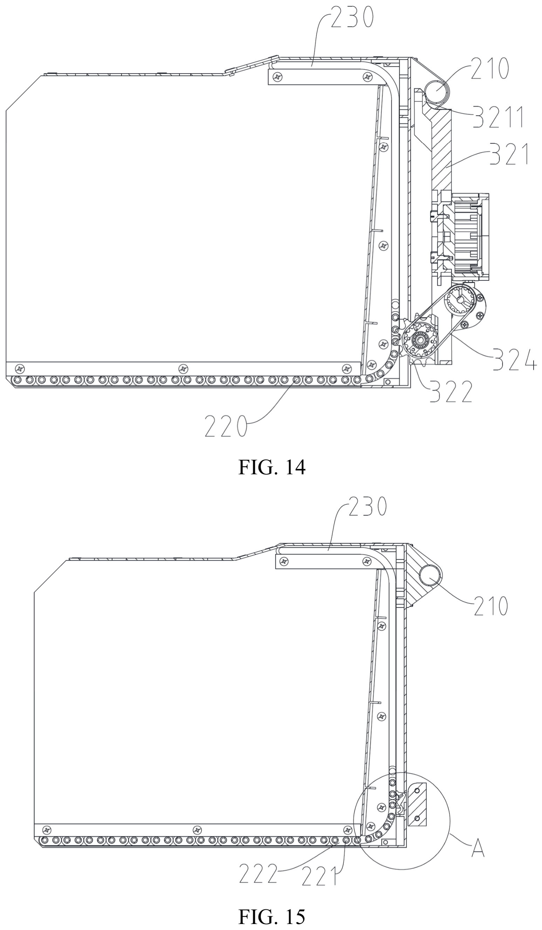

The moving parts 220 may be driven to be extended and retracted in various manners, and driving parts may be arranged in the packing boxes 200 themselves. In an illustrative embodiment of the present disclosure, when the mechanical arm 300 is connected to the packing boxes 200, the end actuator 320 drives the moving parts 220 to be retracted or extended. As shown in FIG. 9 and FIG. 14, each of the roller blinds includes a plurality of carbon rods 221 sequentially arranged in parallel. Ends of two adjacent carbon rods 221 are connected through a first fixing ring 222. Two adjacent first fixing rings 222 are connected through a second fixing ring. In this way, the plurality of carbon rods 221 are connected, such that overall translation of the roller blinds is implemented. A gap exists between two adjacent carbon rods 221. Side walls of the packing boxes 200 are provided with power end input ports 2022. As shown in FIG. 20 and FIG. 21, a lower side of the body part 321 is provided with a chain wheel 322 and a power member 323 driving the chain wheel 322 to rotate. The power member 323 is mounted at the power end input port 2022 and has a tooth part extending into the gaps, so as to drive the roller blinds to move. The power member 323 may be an electric motor. If extended, the roller blinds may serve as bottom plates of the packing boxes 200 and be used to bear the goods. If the roller blinds are retracted, bottom plates disappear and then the goods automatically fall. In addition, a power source of the roller blinds comes from the chain wheel 322 on the end actuator 320. When the end actuator 320 is connected to the packing boxes 200, the roller blinds may be driven to be retracted. In a case where the packing boxes 200 are used independently, the roller blinds may always be at extension positions, such that abnormal falling of the goods in a non-distribution case is avoided.

In order to obtain positions of the roller blinds in the accommodating channels 230, in the present disclosure, as shown in FIG. 20, a Hall sensor 326 is arranged at a position of the body part 321 closer to the chain wheel 322. As shown in the figure, an edge at one side of the body part 321 is provided with a clamping recess, and a probe of the Hall sensor 326 is fixed to an upper side of the chain wheel 322 by penetrating the clamping recess. A mounting position of the Hall sensor 326 may be designed as required, and moreover, influence on rotation of the chain wheel 322 has to be avoided. Magnetic members are arranged in inner cavities of the carbon rods 221 located at two ends of each of the roller blinds. The Hall sensor 326 is used to determine positions of the roller blinds in the accommodating channels 230 by detecting positions of the carbon rods provided with the magnetic members, such that whether the roller blinds move in place is determined. In FIG. 12, a left end of the roller blind is located at an end of the accommodating channel 230 and moves to an extended limit position. In FIG. 13, a right end of the roller blind is located at an end of the accommodating channel 230 and moves to a retracted limit position. The Hall sensor 326 determines whether the roller blinds move to the limit position shown in FIG. 12 or FIG. 13 by detecting the positions of the carbon rods 221 provided with the magnetic members, such that the power member 323 is controlled to be started or stopped.

Further, in order to prevent the roller blinds from being accidentally retracted at the extension positions, in the present disclosure, as shown in FIG. 10 and FIG. 15, the packing boxes 200 are provided with locking parts 240 cooperating with the moving parts 220. In a case where the locking parts 240 are unlocked, the roller blinds may move in the accommodating channels 230. In a case where the locking parts 240 are locked, the roller blinds are located at any positions in the accommodating channels 230. The locking parts 240 may prevent the roller blinds from being accidentally retracted, so as to prevent the goods from accidentally falling during transportation, such that security and reliability are improved.

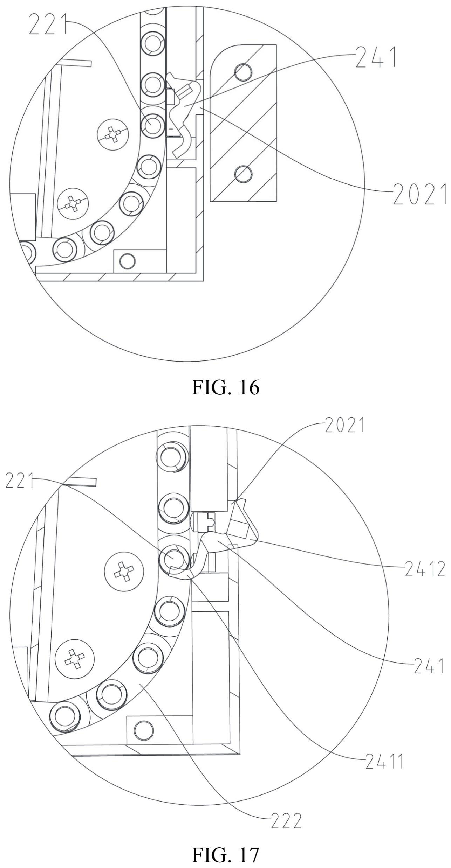

The locking parts 240 may be any suitable structures cooperating with the roller blinds. In an illustrative embodiment of the present disclosure, as shown in FIG. 16 and FIG. 17, the locking parts 240 include rotatable locking pins 241. One ends of the locking pins 241 may be provided with hook-like parts 2411, and the other ends of the locking pins may be provided with clamping protrusions 2412. Each of the hook-like parts 2411 is capable of extending into or retracting from a gap between two adjacent carbon rods 221 of the roller blind. Side walls of the packing boxes 200 are provided with holes 2021. The clamping protrusions 2412 are capable of protruding from the holes 2021.

The locking pins 241 may be kept at locked positions through cooperation of the clamping protrusions 2412 and the holes 2021, so as to limit the roller blinds. The locking pins 241 are driven to rotate, such that the roller blinds may be unlocked.

Power for rotating the locking pins 241 may come from inner structures of the packing boxes. In the present disclosure, power for driving the locking pins 241 to rotate comes from the end actuator 320. As shown in FIG. 20, the lower side of the body part 321 is provided with contact parts 329 corresponding to positions of the holes 2021 on the packing boxes 200. Rotating shafts on which the locking pins 241 are located are sleeved with elastic members (not shown in the figure). When the end actuator 320 is connected to the packing boxes 200, the contact parts 329 abut against the clamping protrusions 2412, and compress the elastic members to press the clamping protrusions 2412 into the packing boxes 200. The locking pins 241 may be driven to rotate, to switch from a locked state shown in FIG. 17 to an unlocked state shown in FIG. 16. When the end actuator 320 is disconnected from the packing boxes 200, the locking pins 241 may be switched back to the locked state shown in FIG. 17 under an elastic force of the elastic members, such that the goods are prevented from falling accidentally when the roller blinds are retracted.

In an embodiment in which the packing boxes 200 are arranged on the rack 100, as shown in FIG. 1, the rack 100 is of a frame structure 110 having a plurality of cabinets. The cabinets are used to accommodate the packing boxes 200. The mechanical arm 300 is used to move the packing boxes 200 in a horizontal direction to enter or exit the cabinets. The gripping parts 210 of the packing boxes 200 may be arranged on the first side walls 202. Positions of the square structures corresponding to the first side walls 202 are provided with openings 250 used to store the goods. Openable and closable cabinet doors 140 are arranged at one sides of the cabinets facing away from entrances of the packing boxes 200, so as to close the openings 250. The rack 100 and the packing boxes 200 are combined to form latticed cabinets similar to a takeaway box. The cabinet doors 140 may be automatically opened. At one sides on which the cabinet doors 140 are located, a user may open the cabinet doors 140 to place the goods into the packing boxes 200 from the openings 250. During unloading, the mechanical arm 300 removes the packing boxes 200 from the rack 100 from opposite sides. In addition, different order information is carried on the plurality of cabinet doors 140 respectively. When the goods are stored, two-dimensional codes on the distribution vehicle 400 are scanned, and then the cabinet doors 140 corresponding to the order information are automatically opened. The user may place the goods from the openings 250 manually or through the mechanical arm 300. Clearly, the cabinet doors 140 controlled to be opened through buttons also fall within the protection scope of the present disclosure.

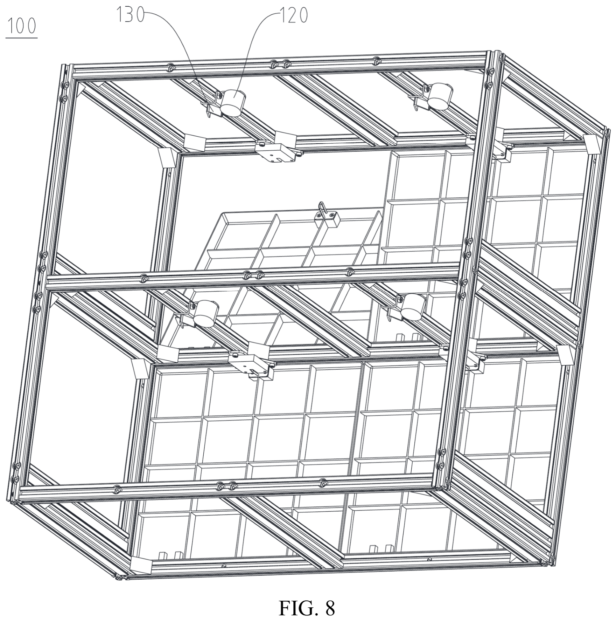

The frame structure 110 may guide entering and exiting of the packing boxes 200. Further, as shown in FIG. 8 and FIG. 9, each of the cabinets of the rack 100 is provided with a guiding member 130, the packing boxes 200 are provided with guiding holes 270 matched with the guiding members 130 in shape, and a size of the guiding holes 270 gradually decreases in a moving direction in which the packing boxes 200 enter the cabinets. The guiding members 130 may of arrow-shaped structures pointing in a direction of entering the cabinets, and the guiding holes 270 may be triangular holes. In a process of pushing the packing boxes 200 back to the rack 100, the guiding members 130 gradually enter the guiding holes 270, so as to guide movement of the packing boxes 200 and make up for deviations of the packing boxes 200 in a process of moving back to the rack 100. The size of the guiding holes 270 is designed to make up for a deviation of ±10 mm, such that a problem that the packing boxes 200 do not move in place is avoided.

The plurality of packing boxes 200 are placed on the rack 100 separately, and the entire container 10 is placed on the distribution vehicle 400. In a process of driving in a middle route, in order to prevent the packing boxes 200 from falling from the rack 100, in the present disclosure, an electromagnet 120 is arranged on each of the cabinets of the rack 100, the packing boxes 200 are provided with magnetic adsorption members 260, and the electromagnets 120 and the magnetic adsorption members 260 are capable of being connected in a switched-on or switched-off manner. In a driving process of the distribution vehicle 400, the electromagnets 120 are powered off to be attracted to the magnetic adsorption members 260, such that the packing boxes 200 are prevented from falling out, and connection between the packing boxes 200 and the rack 100 is ensured. When unloading is needed, the electromagnets 120 are powered on, magnetic forces disappear, and the packing boxes 200 may be easily removed from the rack 100.

In the present disclosure, the guiding holes 270 and the magnetic adsorption members 260 are all arranged on top walls 201 of the packing boxes 200. Positions of the guiding members 130 and the electromagnets 120 may be designed according to positions of the guiding holes 270 and the magnetic adsorption members 260 on the packing boxes 200. The magnetic adsorption members 260 may be of thin-film structures, and do not influence movement of the packing boxes 200. In addition, the packing boxes 200 provided by the present disclosure include no electric parts, have higher waterproofing and dust-proofing performance, and are easy to clean.

In addition, in the present disclosure, the clamping edges 327 extending into the gripping parts 210 are arranged at the upper side of the body part 321, and the chain wheel 322 is arranged at the lower side of the body part 321. Teeth of the chain wheel 322 may be clamped in the gaps of the carbon rods 221, and the packing boxes 200 are connected to the upper side and the lower side of the end actuator 320 respectively, such that reliability and stability of connection between the packing boxes 200 and the end actuator 320 may be ensured, and the packing boxes 200 may be driven to move through the mechanical arm 300. The clamping edges 327 may be arc-shaped edges having a gradually decreasing thickness in an upward direction, so as to conveniently extend into the gripping spaces for clamping.

In the present disclosure, as shown in FIG. 20 and FIG. 21, the chain wheel 322 is arranged on a front surface of the body part 321, and the power member 323 is arranged on a back surface of the body part 321. The power member 323 and the chain wheel 322 are connected through a transmission member 324. The body part 321 is provided with a through hole. The transmission member 324 penetrates the through hole. The power member 323 may be an electric motor, and drives the chain wheel 322 to rotate through a synchronous belt. In this case, the chain wheel 322 meshes with the roller blinds, the roller blinds may be driven to move, such that the roller blinds may be opened and closed. In addition, one of the power member 323 and the chain wheel 322 is located on the front surface of the body part 321, and the other one is located on the back surface of the body part. Space of the body part 321 is maximally used, and a driving function on the chain wheel 322 is achieved.

To ensure a driving function of the chain wheel 322 for the roller blinds, as shown in FIG. 20, the front surface of the body part 321 is provided with lugs oppositely arranged. The plurality of chain wheels 322 may be arranged on a mounting shaft 3220. Two ends of the mounting shaft 3220 are mounted on the lugs respectively. The transmission member 324 may be a synchronous belt. One end of the synchronous belt is arranged on the mounting shaft 3220 in a sleeving manner, and the other end of the synchronous belt is arranged on an output shaft of the power member 323 in a sleeving manner. After the end actuator 320 is connected to the packing boxes 200, the plurality of chain wheels 322 may simultaneously act on the gaps of the carbon rods 221, and simultaneously drive the roller blinds to move. Specifically, in an embodiment shown in FIG. 14, when the roller blinds need to be retracted, the chain wheel 322 is driven to rotate clockwise. In this case, the power member 323 rotates clockwise, and the roller blinds move upward to the retraction positions. When the roller blinds need to be driven, the chain wheel 322 is driven to rotate anticlockwise, the power member 323 rotates anticlockwise, and the roller blinds move downward to the extension positions.

In the end actuator 320 provided by the present disclosure, through cooperation between the clamping edges 327 and the gripping parts 210 at the upper side and through a meshing action of the chain wheel 322 and the gaps between the carbon rods 221 at the lower side, a stable grabbing action between the mechanical arm 300 and the packing boxes 200 may be implemented, so as to implement movement and transportation of the packing boxes 200. In addition, the entire body part 321 moves downward and backward, and the clamping edges 327 may easily exit from the gripping parts 210. After a delivery action is completed, an action of separating the packing boxes 200 from the end actuator 320 may be easily implemented, and is simple and convenient to operate.

As shown in FIG. 19 and FIG. 21, the body part 321 is provided with a connecting hole 328 used to be connected to an end of the multi-axis mechanical arm 310. A shape of the connecting hole 328 may be designed according to a shape of the end of the multi-axis mechanical arm 310. The connecting hole herein is a circular connecting hole, and is provided at a middle position of the body part 321. The shape and a position of the connecting hole 328 may be specifically designed according to an actual situation.

In addition, as shown in FIG. 20 and FIG. 21, a detachable external hanging member 325 is arranged at one side of the body part 321, and the external hanging member 325 may be at least one of a camera, a detection element, and an indicator light. The camera may identify an end delivery point position, and identify the gripping parts 210 and the power end input ports 2022 on the packing boxes 200. For example, the camera may be used to detect whether an end delivery position is occupied, and precisely locate the delivery position, so as to ensure accuracy of the delivery position of the goods. In response to detecting that the roller blinds move to retracted limit positions and extended limit positions, the indicator light may provide corresponding prompts, and for example, become green, and the power member 323 is controlled to be started or stopped in time.

In the present disclosure, the body part 321 is provided with a plurality of lightening holes 3210, such that a weight of the end actuator 320 is reduced as much as possible, and an overall lightweight design is implemented.

Specifically, with takeaway delivery as an example, a working process of a device for automatically delivering goods according to the present disclosure will be described in detail.

In an action of takeaway placement, a delivery man reaches a restaurant to obtain a takeaway, and then scans a two-dimensional code on a distribution vehicle 400. A cabinet door 140 corresponding to a latticed opening is opened automatically. The delivery man places the takeaway into a packing box 200, and then closes the cabinet door 140 to complete the action of takeaway placement.

In a delivery action, the distribution vehicle 400 is autonomously driven to a delivery place according to order information, performs automatic parking, identifies a delivery point, and plans a delivery position and a motion path of a mechanical arm 300. The mechanical arm 300 performs a grabbing action on a to-be-delivered packing box 200 on a rack 100. A clamping edge 327 extends into a gripping part 210, and a chain wheel 322 meshes with a roller blind, such that connection between the packing box 200 and an end actuator 320 is completed. In this case, a contact part 329 abuts against a clamping protrusion 2412, and drives a locking pin 241 to rotate. A hook-like part 2411 exits a gap of carbon rods 221, such that unlocking is completed. A multi-axis mechanical arm 310 moves according to a specified motion path so as to place the packing box 200 in a delivery region. In this case, a power member 323 is started, and a transmission member 324 drives the chain wheel 322 to rotate, so as to drive the roller blind to move from an extension position to a retraction position. In this way, goods automatically fall to the delivery position. Finally, the roller blind is driven to restore to the extension position, and an empty packing box is placed back to the rack 100, such that an entire automatic delivery action is completed.

In the device for automatically delivering goods according to the present disclosure, the packing boxes 200 may accommodate different types of goods. A standardized design of a circulation process and a retractable and extendable moving part 220 design are implemented with one type of packing boxes. After the roller blind is retracted, the goods automatically fall to the delivery position, and only the goods are placed at the tail end. In this way, an asset management problem caused by container placement is avoided, and a use ratio of containers is improved. On one hand, the end actuator 320 of the mechanical arm 300 may grab the packing boxes 200, and may also drive the roller blinds to be retracted or extended through the chain wheels 322. On the other hand, when the end actuator 320 is connected to the packing boxes 200, the locking pins 241 may be driven to rotate to switch the roller blinds between a locked state and an unlocked state, whether the roller blinds move in place may be identified, and whether the delivery position is occupied is identified, such that accuracy of the entire delivery process is ensured. The entire device for automatically delivering goods is placed on the distribution vehicle 400, and automatic driving in a middle route, automatic goods handling at the front and rear ends and automatic full-link delivery are implemented, such that picking up goods by a user is not influenced, labor intensity of the delivery personnel is reduced, and distribution efficiency is improved.

The preferred implementations of the present disclosure are described in detail above with reference to the accompanying drawings. However, the present disclosure is not limited to specific details of the above implementations. Within the scope of the technical concept of the present disclosure, various simple modifications can be made to the technical solution of the present disclosure, and these simple modifications all fall within the protection scope of the present disclosure.

In addition, it should be noted that various specific technical features described in the above specific implementations can be combined in any suitable manner, without contradiction. In order to avoid unnecessary repetition, various possible combinations will not be described separately in the present disclosure.

In addition, different implementations of the present disclosure can also be arbitrarily combined without departing from the idea of the present disclosure, and these combinations should still be regarded as content disclosed in the present disclosure.

## Claims

1. A device for automatically delivering goods, comprising:
a container (10) comprising a rack (100) and packing boxes (200) arranged on the rack (100), wherein each of the packing boxes (200) has a bottom wall used to bear the goods, and the bottom wall is a retractable and extendable moving part (220); and
a mechanical arm (300) used to move the packing boxes (200) between a specified position and the container (10), wherein the mechanical arm (300) comprises a mechanical arm body and an end actuator (320) mounted at an end of the mechanical arm body, and the end actuator (320) is used to grab the packing boxes (200) and drive, when the packing boxes (200) are moved to the specified position, the moving parts (220) to be retracted, so as to release the goods.

2. The device for automatically delivering goods according to claim 1, wherein accommodating channels (230) are formed on edges of opposite side walls of each of the packing boxes (200), the edge of each of the side walls at least comprises a bottom edge of the packing box (200) and one side edge adjacent to the bottom edge, and each of the moving parts (220) is a roller blind movable between extension positions and retraction positions in the accommodating channels (230), wherein
at the extension positions, the roller blinds are at least partially located at the bottom edges, and the roller blinds are capable of closing bottom openings of the packing boxes (200) and bearing the goods; and
at the retraction positions, the roller blinds are at least partially located at the side edges, the bottom openings of the packing boxes (200) are exposed, and the goods are released.

3. The device for automatically delivering goods according to claim 2, wherein the end actuator (320) comprises a body part (321), a chain wheel (322) arranged on the body part (321), and a power member (323) driving the chain wheel (322) to rotate, and teeth of the chain wheel (322) are capable of extending into gaps of the roller blinds, so as to drive the roller blinds to move in the accommodating channels (230).

4. The device for automatically delivering goods according to claim 2, wherein each of the roller blinds comprises a plurality of carbon rods (221) sequentially arranged in parallel, magnetic members are arranged in inner cavities of the carbon rods (221) located at two ends of each of the roller blinds, the end actuator (320) is provided with a Hall sensor (326), and the Hall sensor (326) is used to determine positions of the roller blinds in the accommodating channels (230) by detecting positions of the carbon rods (221) provided with the magnetic members.

5. The device for automatically delivering goods according to claim 3, wherein the packing boxes (200) are provided with locking parts (240) cooperating with the moving parts (220), and when the end actuator (320) is connected to the packing boxes (200), the locking parts (240) are driven to be unlocked.

6. The device for automatically delivering goods according to claim 5, wherein the locking parts (240) comprise rotatable locking pins (241), one ends of the locking pins (241) are provided with hook-like parts (2411), the other ends of the locking pins are provided with clamping protrusions (2412), each of the hook-like parts (2411) is capable of extending into or retracting from a gap between two adjacent carbon rods (221) of the roller blind, side walls of the packing boxes (200) are provided with holes (2021), the clamping protrusions (2412) are capable of protruding from the holes (2021), and when the end actuator (320) is connected to the packing boxes (200), the body part (321) presses the clamping protrusions (2412) into the packing boxes (200), so as to drive the locking pins (241) to rotate.

7. The device for automatically delivering goods according to claim 1, wherein the rack (100) is provided with a plurality of cabinets, the cabinets are used to accommodate the packing boxes (200), the mechanical arm (300) is used to move the packing boxes (200) in a horizontal direction to enter or exit the cabinets, and openable and closable cabinet doors (140) are arranged at one sides of the cabinets facing away from entrances of the packing boxes (200), so as to close openings (250) of the packing boxes (200).

8. The device for automatically delivering goods according to claim 7, wherein the cabinets are provided with guiding members (130), the packing boxes (200) are provided with guiding holes (270) matched with the guiding members (130) in shape, and a size of the guiding holes (270) gradually decreases in a moving direction in which the packing boxes (200) enter the cabinets.

9. The device for automatically delivering goods according to claim 7, wherein the cabinets are provided with electromagnets (120), the packing boxes (200) are provided with magnetic adsorption members (260), and the electromagnets (120) and the magnetic adsorption members (260) are capable of being connected in a switched-on or switched-off manner.

10. A distribution vehicle, wherein the device for automatically delivering goods according to any one of claims 1 to 9 is mounted on the distribution vehicle (400).
